# EUROPEAN PATENT APPLICATION

(11) **EP 3 764 502 A1**
(43) Date of publication of application: **13.01.2021**
(21) Application number: 19184965.2
(22) Date of filing: 08.07.2019
(51) Int. Cl.: H02J 3/14, G06Q 50/06, H02J 3/38, H02J 13/00

(54) **UNIVERSAL BALANCING FRAMEWORK**

(71) Applicant: E-Revolution Kft., 2040 Budaörs (HU)
(72) Inventor: CSERVÖLGYI, Krisztián, 2040 Budaörs (HU); KONARIK, Péter, 1023 Budapest (HU); SZIEBEN, László, 8600 Siófok (HU)
(74) Representative: Kacsuk, Zsófia

(57) **Abstract**

The invention relates to a method for balancing electric power supply and demand in an electricity system comprising electricity network and a plurality of points of demand, PODs, each of which is electrically connected to at least one load, the method comprising
- providing a plurality of said loads with load power regulation modules,
- providing at least one remote server being remote from said plurality of PODs,
- providing a plurality of PODs with gateways, each gateway provided at one of said plurality of PODs being connectable to the at least one UBF server and to at least one load power regulation module at said POD,
- monitoring loads provided with load power regulation modules by the gateways at the PODs,
- creating balancing capacity offers by the gateways for regulating power consumption of said loads,
- transmitting said balancing capacity offers from the gateways to the at least one remote server,
- comparing said balancing capacity offers with current electric power supply and demand,
- accepting balancing capacity offers suitable for contributing to balancing current electric power supply and demand,
- sending, from the at least one remote server notifications of accepted balancing capacity offers to the gateways having transmitted the balancing capacity offers accepted,
- sending commands from the gateways to the load power regulation modules connected to the loads to which the accepted balancing capacity offers relate, said commands causing the load power regulation modules to regulate the power consumption of said loads in accordance with the accepted balancing capacity offers. The invention further relates to a universal balancing framework.

## Description

The present invention relates to a method and a universal balancing framework for balancing electric power supply and demand in an electricity system.

The electricity market involves numerous players. On its way from generators to consumers, electricity passes through an open market involving numerous players.

In the context of the present invention the first players in the chain of providing electricity from generators to consumers are referred to as electricity generators (EGs). EGs generate power either in 'traditional' ways (e.g. in nuclear power plants, combined-cycle gas turbine facilities or combined heat and power plants) or in units using renewable energy sources (like wind or solar farms and thermal or hydroelectric power stations). Electric current generated by the EGs is injected into the (high-voltage) transmission system or directly into (medium or low-voltage) distribution systems before being delivered to customers (end user such as industry, institutions, small and medium-sized enterprises, residential customers, etc.).

In the context of the present invention power exchanges are understood to be platforms used by market players to anonymously negotiate same-day or next-day purchases and sales of electricity.

In the context of the present invention a transmission system operator (TSO) is an entity entrusted with transporting energy (electrical power) on a national or regional level, using fixed infrastructure comprising high and very-high voltage transmission systems. Accordingly, the TSO is an operator that transmits electrical power from EGs over the electrical grid to regional or local electricity distribution operators.

The electricity market also stretches across borders, and the interconnections between national transmission systems allow countries to help each other and enable cross-border energy exchanges. For this reason, collaboration between TSOs is crucial.

TSOs may have different names in different countries, for example in the United States TSOs are called Regional Transmission Organizations (RTOs).

The TSO is required to maintain a continuous (second-by-second) balance between electricity supply from EGs and demand from consumers, and also ensure the provision of reserves that will allow for sudden contingencies. The TSO achieves this by acting as a balancing group manager at a national or regional level. The TSO aggregates supply, demand and transmission system schedules for the near future periods and instructs EGs participating in the balancing energy market when and how much electricity to generate. The TSO also manages any contingent events that cause the balance between supply and demand to be disrupted.

In the context of the present invention distribution system operators (DSOs) are local distribution companies that maintain the portion of the electricity supply network (grid) that is closest to the residential and small commercial consumers, i.e. medium to low-voltage distribution systems. DSOs transmit electricity to residential customers and small commercial consumers, for example, as well as being responsible for public lighting, among other things. There are many alternative terms for DSOs depending on the location, e.g. within the UK's National Grid they are known as distribution network operators.

DSOs usually act as local balancing group managers having their own balancing groups for their own customers and normally buy energy from other trading companies or generate it by their own. They re-sell it to the smaller customers and cover their network losses. Larger customers typically buy their energy directly from a wholesaler and buy only the network services from the DSOs. For this reason, other local balancing group managers could be present in the electricity market. In the context of the present invention all balancing group managers below the TSO level are referred to as local balancing group managers irrespective of the territorial extent of the physical distribution system to which the managed consumers and/or generators belong.

In the context of the present invention regulators are entities entrusted with regulating the electricity market, where a number of players have a legal monopoly.

In the context of the present invention the term customers refers to end users such as industry, institutions, small and medium entities, residential customers, etc. Accordingly, customers can be anyone from individuals to major industrial players. Industrial users are often directly connected to the high-voltage grid, whereas individual (residential) users and small and medium-sized enterprises, for example, are connected to the distribution system. In the context of the present invention customers connected to the distribution system are referred to as DSO customers. DSO customers are connected to the DSO network at customer end points, also referred to as point of demand (POD), through electric meters for measuring the amount of electric energy consumed by loads or produced by power generators connected to the customer side of the customer end point.

In the context of the present invention a load is any electric device that can consume electric energy delivered through the electricity distribution system.

Traditionally, there has been a clear distinction between the roles performed by DSOs and TSOs. DSOs connected new loads and ensured that the distribution network was reinforced and maintained to be able to deliver power to consumers all year round while TSOs connected the EGs needed to supply the consumers with power, and managed the real-time supply and demand balance on the network.

This traditional role has been disrupted by the emergence of distributed generation. In the context of the present invention distributed generation refers to electric power generation by small distributed generators (DGs), typically residential or SME green energy generators, such as rooftop solar, which are not part of the EGs and which are connected to the distribution system rather than the high and very-high voltage transmission systems of the TSO. The DGs are also understood to include small electricity generators operating at or below 50 MW, provided that these are connected to the medium-voltage distribution systems of the DSOs. Alternatively, small electricity generators connected to the medium-voltage distribution systems of the DSOs may be excluded from the DGs.

The increasing levels of distributed generation introduces a number of challenges:
The DSOs generally act as local balancing group managers for small customers. In this capacity the DSOs need to anticipate and schedule future demand, which is made more difficult by distributed generation offsetting that demand, especially when a lot of it is hidden behind customer meters, as is the case with rooftop solar. On operational timescales, the TSO, also acting as a balancing group manager on a national or regional level, needs to balance the national or regional transmission system, which requires more and more flexible capacity.

Because many DGs are hardly predictable and invisible to the DSOs (for example rooftop solar), the DSOs and any other local balancing group managers below the TSO level are unable to efficiently predict future demand, whereby national or regional level balancing is becoming more difficult and expensive for the TSOs.

The DSOs are facing a further problem associated with the more and more widespread use of electric vehicles (EVs). The increasing number of EVs and the need of charging the EVs can create a sudden peak in electric power demand in the evening hours when drivers arrive home and start charging.

Unfortunately, the power supplied by DGs and the power demand of EVs do not meet in time as e.g. rooftop solar provide energy during the day, while EVs are typically charged in the evening. Since it is very expensive to store electric energy the electric energy produced has to be consumed firstly at all times.

The rapidly changing demand and supply cannot be adequately addressed at the TSO level because electricity supply of the EGs is not flexible enough. Most EGs cannot be shut down or restarted instantaneously while the balance of electric power supply and demand has to be maintained from minute-to-minute. Therefore, a new way of balancing the whole electricity system is required.

Theoretical solutions have been proposed to overcome the aforementioned problems, however these solutions have not been put in practice on a large scale either because they require changing the structure of the electricity market, which is extremely expensive and faces many regulatory obstacles or because they require central control of electric power consumption of customers' electric appliances, which is unacceptable for many customers.

It is an objective of the present invention to overcome the above discussed problems without having to change the present structure of the electricity market and without significantly interfering with consumers' freedom to consume electricity at their will.

The inventor of the present invention has realised that the above objective can be achieved by providing an infrastructure for balancing electric power supply and demand by customer-side voluntary but centrally harmonised regulation of flexible loads and optionally flexible DGs connected to one or more electricity distribution systems. Only minor infrastructural modifications are required to the existing infrastructure in order to create a large pool of flexible loads and possibly DGs which can be used, on a voluntary basis, to offset fluctuations in electricity consumption and supply.

Accordingly, the present invention relates to a method according to claim 1 and a universal balancing framework according to claim 3.

Further advantageous embodiments of the invention are defined in the attached dependent claims.

Further details of the invention will be explained by way of exemplary embodiments with reference to the figures, wherein:
Fig. 1 is a schematic block diagram of a preferred embodiment of a universal balancing framework according to the invention.
Fig. 2 is a schematic block diagram of server hierarchy of a preferred universal balancing framework.

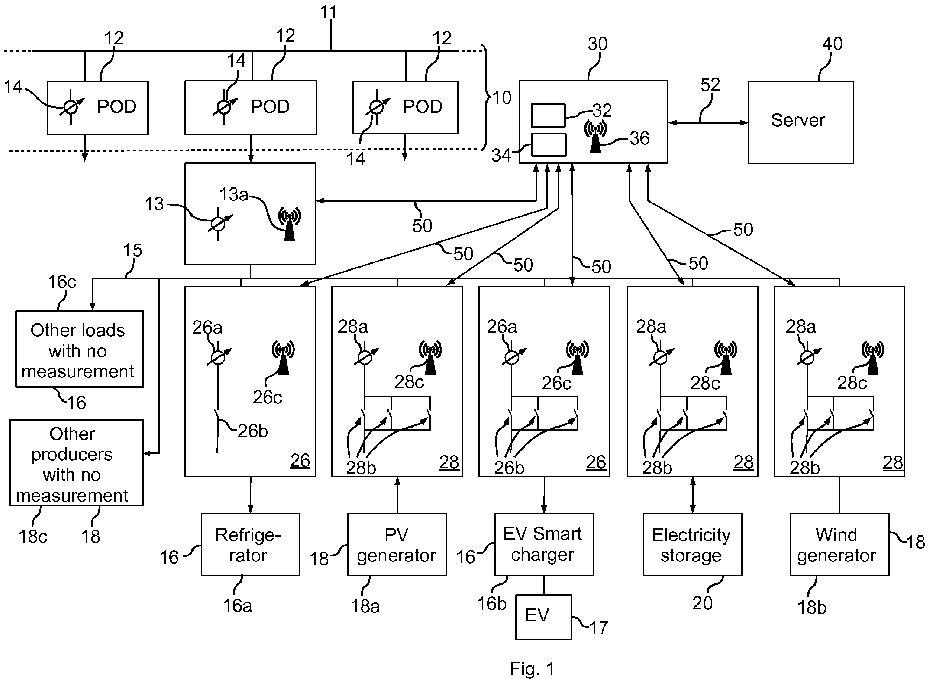

Fig. 1 schematically illustrates a preferred embodiment of a universal balancing framework 100 in accordance with the present invention.

The universal balancing framework 100 according to the invention can be provided in any existing electricity distribution system 10 operated by a distribution system operator (DSO) and comprising electricity network 11 (also referred to as DSO network 11) and a plurality of PODs 12. The electricity network 11 (also called utility grid) may include any conventional network elements used in electricity distribution systems 10 such as electric cables, grid transformers, converters, switches, etc. The PODs 12 are the electric connection points to the electricity distribution system's 10 electricity network 10. The PODs 12 are provided with electric meters 14 for metering electric power production of the producers 18 and consumption of any loads 16 electrically connected to the POD 12 through an internal electricity network 15 provided on the customer side of the POD 12. The dashed line in Fig. 1 illustrates that the electric meters 14 form part of the DSO network 10, because in a number of countries the electric meters 14 belong to the DSO, however, from a technical point of view it is also possible to provide the electric meters 14 as a part of the internal electricity network 15. For the sake of simplicity in Fig. 1 only one internal electricity network 15 is shown with exemplary customer side appliances (such as loads 16) connected thereto. The internal electricity network 15 may include any conventional residential network elements such as electric cables, electric sockets, fuses, switches, etc.

The exemplary loads 16 depicted in Fig. 1 consist of loads 16 with separate measurement such as a refrigerator 16a and a smart electric vehicle (EV) charger 16b, to which an EV is connected when in use and other loads 16d with no separate measurement such as e.g. lighting devices, IT devices, etc. Although not depicted, the loads 16 are typically connected to the internal electricity network 15 through electric sockets.

In addition to loads 16 various types of DGs 18 may also be connected to the internal electricity network 15 of which some may have separate measurement such as a photovoltaic generator 18a (e.g. in the form of a rooftop solar) and a wind generator 18b and optionally other DGs 18d with no measurement.

One or more electricity storages 20 may also be connected to the internal electricity network 15 for storing electric energy produced by the DGs that is not consumed at the same time.

If one or more DGs 18 are connected to the POD 12 then the electric meter 14 is preferably a bi-directional electric meter which is capable of allowing electric power supply from the POD 12 to the DSO network 11 in case the electric energy generated by the one or more DGs 18 is not consumed by the loads 16 connected to the same internal electricity network 15 and no electricity storage 20 is connected to this internal electricity network 15 or the one or more electricity storages 20 connected therewith is or are not capable of storing the supplied electric power.

The bi-directional electric meter 14 preferably measures both the electric energy consumption from and the contribution to the DSO network 11 and the balance is settled between the customer and the DSO. In some countries this settlement is regulated by law, in other countries the billing conditions may be regulated in individual contracts.

The universal balancing framework (UBF) 100 according to the invention comprises components that enable the above illustrated existing systems to balance electric power supply and demand within the electricity distribution systems 10 at a local, regional or national level by customer-side voluntary but centrally harmonised regulation of the consumption of the loads 16 and optionally of the power supplied by the DGs 18 connected to the electricity network 11 through the PODs 12. The UBF 100 comprises at least:
- a plurality of load power regulation modules 26 each of which is electrically connected to one of the loads 16,
- a remote server 40 (referred to as UBF server 40), and
- a plurality of gateways 30 each of which is installed at one of the PODs 12.

The UBF 100 preferably further comprises a plurality of supply power regulation modules 28 each of which is electrically connected to one of the DGs 18.

In case the internal electricity network 15 comprises an electricity storage 20 this is preferably also connected to one of the supply power regulation modules 28.

The UBF 100 may further comprise a smart electric meter 13 in addition to the already present electric meter 14 of the DSO. The term "smart" refers to the capacity of providing electric power consumption/supply information real-time or in time intervals sufficiently close to real-time (e.g. every minute or every 5 minutes or every 15 minutes) to monitor actual electric power consumption/supply at the given POD 12. If the electric meter 14 already installed at the POD 12 is also a smart meter in this sense then this can be used for the purpose of monitoring within the UBF 100 as well. The smart electric meter 13 is provided with a communication unit 13a, such as preferably ZigBee, Wifi or bluetooth communication unit 13a capable of wireless communication with the UBF gateway 30. It is also conceivable to provide wired connection between the smart electric meter 13 and the UBF gateway 30, in which case the communication unit 13a is connected to a wired communication network.

Each of the exemplary load power regulation modules 26 depicted in Fig. 1 comprises an electric metering device 26a, an electric circuit with one or more switches 26b allowing for disconnecting or limiting/controlling power consumption of the load 16 connected therewith and further comprising a communication unit 26c, such as preferably ZigBee, Wifi or bluetooth communication unit 26c capable of wireless communication with the UBF gateway 30. It is also conceivable to provide wired connection between the load power regulation modules 26 and the UBF gateway 30, in which case the communication unit 26c is connected to a wired communication network. The load power regulation modules 26 comprise further conventional IT components such as a processor, volatile and/or non-volatile storage, etc. The load power regulation module 26 may be in the form of a microcontroller, a minicomputer, a smart electric plug or it may be incorporated in the load 16, e.g. the load power regulation module 26 and the smart EV charger 16b may be formed as a single unit. A variety of other possibilities will be apparent to a person skilled in the art.

The load power regulation modules 26 serve primarily to decrease the electric power consumption of the load 16 connected therewith. In some cases this means that the load power regulation module 26 can disconnect the load 16 from the internal electricity network 15. Certain loads 16 are adapted to consume electric power at different discrete rates or within a continuous range. For example, the smart EV charger 16b may be adapted to charge the EV 17 with 3.7 kW (slow charging mode) and with 22 kW (fast charging mode) as well as with 43-50 kW (rapid charging mode). If the internal electricity network 15 allows for slow charging mode and fast charging mode the power consumption of the EV 17 being charged in fast charging mode can either be reduced by switching to slow charging mode or can be completely stopped by switching off the EV charger 16b. Both possibilities would result in up regulation within the distribution system 10 (more electric energy is available) and thereby within the whole electricity system of which the distribution system 10 is part of. If the EV 17 is being charged in slow charging mode switching to fast charging mode would result in down regulation (less electric energy is available), while switching off the EV charger 16b would result in up regulation. In this case the load power regulation module 26 of the smart EV charger 16b may contribute to both decreasing and increasing the electric power consumption, i.e. to both up regulation and down regulation.

The exemplary supply power regulation modules 28 depicted in Fig. 1 also comprise an electric metering device 28a, an electric circuit with one or more switches 28b allowing for disconnecting or limiting/controlling power consumption of the DG 18 connected therewith and further comprising a communication unit 28c, such as preferably ZigBee, Wifi or bluetooth communication unit 28c capable of wireless communication with the UBF gateway 30. It is also conceivable to provide wired connection between the supply power regulation modules 28 and the UBF gateway, in which case the communication unit 28c is connected to a wired communication network. The supply power regulation modules 28 comprise further conventional IT components such as a processor, volatile and/or non-volatile storage, etc. The supply power regulation module 28 may be in the form of a microcontroller, a minicomputer, a smart electric plug or it may be incorporated in the DG 18.

Similarly, the supply power regulation modules 28 serve primarily to decrease the electric power supply of the DG 18 connected therewith. In some cases, this means that the supply power regulation module 28 can disconnect the DG 18 from the internal electricity network 15 or the supply power regulation module 28 may stop the operation of the DG 18 (for example the rotation of the wind generator 18b may be stopped). In other cases, the supply power regulation module 28 may serve to direct the generated power supply to the electricity storage 20, whereby the electricity storage 20 is charged. In yet another case, the supply power regulation module 28 may serve to reduce the electric power generated by the DG 18 if the DG is adapted to generate electric energy at different power rates, e.g. in case of the photovoltaic generator 18a. If the supply power regulation module 28 reduces the net electric power output to the DSO network 11 this results in down regulation within the distribution system 10 (less electric energy is available) and thereby within the whole electricity system of which the distribution system 10 is part of. If the DG 18 is not generating electric energy to its full capacity or some or all of the generated electric energy is used for charging the electricity storage 20 then the supply power regulation module 28 may contribute to both decreasing and increasing the electric power supplied by the DG 18 connected therewith, i.e. to both down regulation and up regulation.

Each gateway 30 is installed at one of the PODs 12. Practically this means that the gateway 30 is powered by electricity provided through the corresponding POD 12, in this respect the gateway 30 can also be regarded as one of the other loads 16, however, the gateway 30 is preferably not regulated by one of the load power regulation modules 26 in order to be fully operational at all times. Alternatively, the gateway 30 may run from a battery, in this case the gateway 30 does not need to be electrically connected to the POD 12. Accordingly, the term "installed at one of the PODs 12" is understood to signify that the gateway 30 is physically installed at a location from where it is data transmissibly connectable with the load power regulation modules 26 connected to the loads 16 which are supplied with electric power through the given POD 12. Being data transmissibly connectable with the load power regulation modules 26 is understood to mean that the gateway 30 is able to communicate via data communication channels 50 established with the load power regulation modules 26 in particular, with the communication units 26c. The data communication channels 50 may be established over wired connection (e.g. local network) and/or wireless connection (e.g. ZigBee, WiFi, Bluetooth connection) as is known per se.

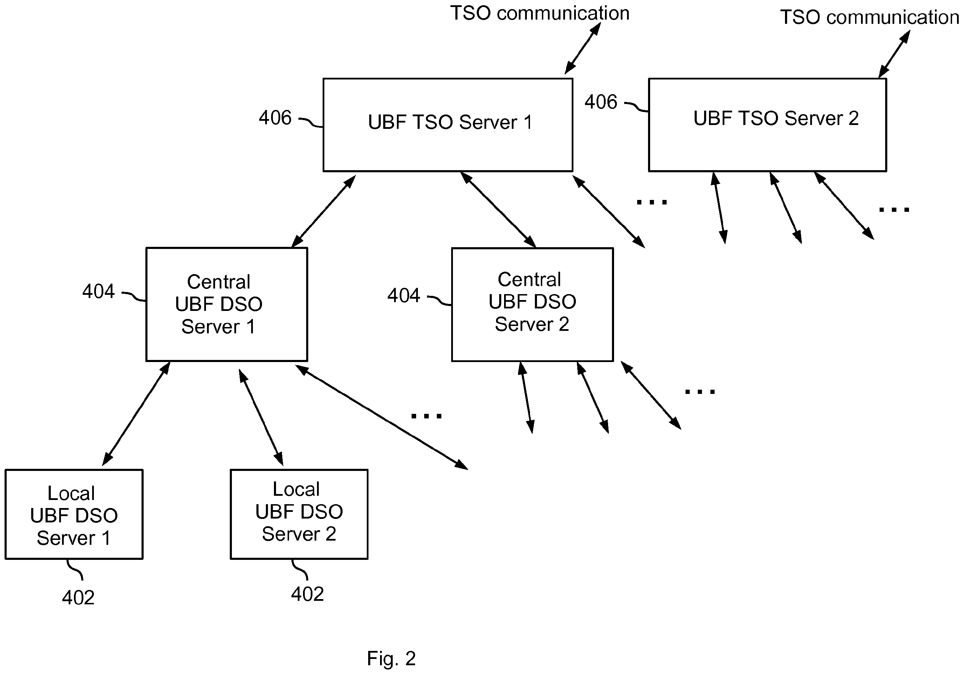

The gateway 30 is also data transmissibly connectable to the UBF server 40 over wired or wireless data communication channel 52 which is preferably established over the Internet preferably in the form of a VPN connection (Virtual Private Network connection). The UBF server 40 may be a traditional physical server or a virtual server. The UBF 100 is preferably provided with a plurality of such servers 40 forming a hierarchical structure for example as in case of the embodiment illustrated in Fig. 2 wherein a plurality of local UBF DSO servers 402 communicate with a central UBF DSO server 404 of the same DSO. The central UBF DSO servers 404 of different DSOs communicate with a TSO server 406 belonging to the TSO of a given country or region and the TSO servers 406 communicate with each other in order to coordinate balancing the electricity system of a larger geographical unit (e.g. the EU).

The gateway 30 is an IT device comprising at least one processor 32, at least one non-volatile storage medium 34 and a communication unit 36 corresponding to the communication units 26c, 28c used in the load power regulation modules 26 and the supply power regulation modules 28. The storage medium 34 contains a software (computer program), which when executed by the processor 32 causes the gateway 30
- to monitor the current power consumption of the loads 16 that are provided with the load power regulation modules 26 at the respective POD 12,
- to create balancing capacity offers for regulating the power consumption of the loads 16,
- to transmit the balancing capacity offers to the remote UBF server 40,
- to transmit, upon receipt of one or more notification of accepted balancing capacity offers from the UBF server 40, commands to the load power regulation modules 26 connected to the loads 16 to which the accepted balancing capacity offers relate, the commands causing the load power regulation modules 26 to regulate the power consumption of these loads 16 in accordance with the accepted balancing capacity offers.
   to transmit, upon receipt of a notification of accepted balancing capacity offer from the at least one remote server, a command to the load power regulation module connected to the loads to which the accepted balancing capacity offers relate, said command causing said load power regulation modules to regulate the power consumption of said loads in accordance with the accepted balancing capacity offers.

Monitoring the active loads 16 is preferably carried out with the help of the electric metering device 26a of the load power regulation modules 26, which are preferably configured to transmit via the communication unit 26c through the data communication channel 50 power consumption readings taken for the respective active load 16. The balancing capacity offers are based on data provided by the load power regulation modules 26, for example the load power regulation module 26 may also transmit data relating to possible up or down regulation by the respective load 16. For example, the above discussed EV charger 16b charging in slow charging mode may provide data indicating possible up regulation of 3 kW and possible down regulation of 19 kW (which is equal to the difference between the 22 kW fast charging mode and the 3 kW slow charging mode). Alternatively, the load power regulation module 26 could send data relating to the possible operating powers or power ranges in addition to sending data relating to the actual power consumption. For example, a load power regulation module formed integrally with the smart EV charger 16 may send data indicating that the actual power consumption is 3 kW and that it is operable at 3 kW or 22 kW. From this information the gateway 30 can create two balancing capacity offers, one of them being an offer to up regulate the distribution system 10 by 3 kW and the other one being an offer to down regulate the distribution system 10 by 19 kW. It is also conceivable that data relating to operating information of the loads 16 provided with load power regulation modules 26 is stored in the storage medium 34 of the gateway 30, whereby the gateway 30 can generate balancing capacity offers based on the actual power consumption readings and the stored data. Various other possibilities are also conceivable as will be apparent to a person skilled in the art.

According to an exemplary embodiment the balancing capacity offers are transmitted to a higher level of the UBF server hierarchy, e.g. to the UBF TSO servers 406, where the balancing capacity offers are compared to actual balancing needs communicated by the TSO. Preferably the UBF TSO server 406 decides which balancing capacity offer to accept in view of the actual balancing needs and in view of physical limitations of the electricity distribution systems 10 and a corresponding notification is routed down in the server hierarchy to the UBF server 40 directly communicating with the gateway 30 which sent the accepted balancing capacity offer. Selecting the balancing capacity offers that are accepted may also involve business considerations, e.g. the balancing capacity offers may include a price for each offer.

When a balancing capacity offer is accepted the UBF server 40 sends a notification to the gateway 30 informing the gateway 30 of this. The balancing capacity offer may contain a unique identifier, which may be included in the notification in order to identify which balancing capacity offer has been accepted. Alternatively, the notification may contain only the type of regulation accepted (e.g. up regulation) and its value (e.g. 3 kW), from which information the gateway 30 can identify which load 16 should be regulated. If more than one loads 16 are currently capable of providing the accepted balancing capacity offer, the gateway 30 may chose which load 16 should be regulated, for example based on a pre-defined priority order.

Various rules may be set up for offering demand balancing capacity. For example, the refrigerator 16b connected to the internal electricity network 15 cannot be disconnected for more than six hours within a period of twelve hours. Another rule could ensure that the EV charger 16b receives enough charging power during the night (e.g. from 8 pm. to 8 am.) to fully charge the EV 17 connected thereto. According to a preferred embodiment the rules can be overwritten by users. For example, a user may have an account for accessing the gateway, may log in to this account e.g. with an application installed and running on his or her mobile phone and after authentication may overwrite the rules relating to the EV charger 16b in order to fully charge the EV 17 at the shortest time possible. Various other implementations are conceivable by a person skilled in the art.

It is further conceivable that the gateway 30 sends balancing capacity offers that are calculated as the possible combinations of up or down regulating capacities of more than one loads 16 and when such a combined balancing capacity offer is accepted the gateway 30 determines which loads 16 to regulate in which direction (decreasing or increasing consumption) and by what extent. For example a combined balancing capacity offer may relate to up regulating the distribution system 10 by switching off both the EV charger 16b which is currently charging the EV 17 and the refrigerator 16b.

The customers can be motivated according to various business schemes to participate in balancing electric power supply and demand in the electricity distribution system 10 from which they receive electric power supply through their respective POD 12. For example, customers can receive a discount on their monthly electricity bill proportional to the accepted and fulfilled balancing capacity offers in the given month.

According to the embodiment illustrated in Fig. 1 the gateway 30 is also data transmissibly connectable to the supply power regulation modules 28 via the same or similar data communication channels 50 as discussed above. The software stored in the storage medium 34 of the gateway 30 when executed by the processor 32 further causes the gateway 30:
- to monitor the power generation of the DGs 18 which are provided with supply power regulation modules 28 at the respective POD 12,
- to create balancing capacity offers for regulating power supplied by the DGs 18,
- to transmit said balancing capacity offers to the UBF server 40,
- to transmit, upon receipt of one or more notification of accepted balancing capacity offers from the UBF server 40, commands to the supply power regulation modules 28 connected to the DGs 18 to which the accepted balancing capacity offers relate, the commands causing the supply power regulation modules 28 to regulate the power supplied by the respective DGs 18 in accordance with the accepted balancing capacity offers.

Monitoring the active DGs 18 is preferably carried out with the help of the supply power regulation modules 28, which are preferably configured to transmit via the communication unit 28c through the data communication channel 50 power generation readings taken by the electric metering devices 28a for the respective active DG 18. The balancing capacity offers are preferably also based on data provided by the supply power regulation modules 28, for example the supply power regulation module 28 may also transmit data relating to possible up or down regulation by the respective DG 18. For example, depending on the solar panels of the photovoltaic generator 18a are connected or disconnected the supply power regulation module 28 may transmit data to the UBF gateway 30 over the data communication channel 50 indicating possible up regulation values corresponding to possible additional energy generated upon connecting solar panels that have been disconnected. Transmitted data may also indicate possible down regulation values or ranges corresponding to possible cutdown on energy generated upon disconnecting one or more solar panels. It is also conceivable that data relating to operating information of the photovoltaic generator 18a (e.g. maximum, minimum and optionally discrete power generation values) is stored in the storage medium 34 of the gateway 30, whereby the gateway 30 can generate balancing capacity offers based on the actual power generation readings and the stored data. The balancing capacity offer preferably contains the possible values or ranges of up or down regulation that can be effected with the corresponding DG 18.

Similar up and down regulation is conceivable for other type of DGs 18 as well. Even if certain DGs 18 do not allow for reducing or increasing the amount of generated electric power when the DG 18 is already active, even such DGs 18 generally allow for down regulation by shutting down the DG 18, and allow for up regulation by starting the DG 18 when it is in the shut down state. For example, when the wind generator 18b is working it allows for down regulation by stopping or disconnecting the wind generator 18b, and when the wind generator 18b is stopped (or disconnected) it allows for up regulation if the wind is blowing.

It is further possible to down regulate the distribution system 10 by outputting one or more DGs 18 onto the electricity storage 20, whereby the electricity storage 20 is charged instead of supplying electric power to the distribution system 10 through the POD 12. When the electricity storage 20 is charged it allows for up regulation by feeding electric power into the distribution system 10 or by connecting one or more active loads 16 to the electricity storage 20 in order to consume the stored electric energy instead of consuming electric power provided through the POD 12.

Various other possibilities are also conceivable as will be apparent to a person skilled in the art.

Preferably balancing capacity offers of the DGs 18 are also evaluated and accepted at a higher level of the UBF server hierarchy, e.g. at the UBF TSO server 406, as explained earlier.

When a balancing capacity offer is accepted, the UBF server 40 sends a notification to the gateway 30 informing the gateway 30 of this. The balancing capacity offer may contain a unique identifier, which may be included in the notification in order to identify which balancing capacity offer has been accepted. Alternatively, the notification may contain only the type of regulation accepted (e.g. up regulation) and its value (e.g. 100 kW), from which information the gateway 30 can identify which DG 18 should be regulated. If more than one DGs 18 are currently capable of the up or down regulation corresponding to the accepted balancing capacity offer, the gateway 30 may chose which DG 18 should be regulated, for example based on a pre-defined priority order.

Various rules may be set up for offering supply balancing capacity. For example if a DG 18 cannot or preferably should not be shut down then there can be a rule that down regulating balancing capacity offers can only be given in respect of the given DG 18 as long as the generated power can be used to charge the electricity storage 20; once the electricity storage 20 has been fully charged this DG 18 can no longer contribute the down regulation. Various other rules are conceivable by a person skilled in the art.

It is further conceivable that the gateway 30 sends balancing capacity offers that are calculated as the possible combinations of up or down regulating capacities of more than one DGs 18 and when such a combined balancing capacity offer is accepted the gateway 30 determines which DGs 18 to regulate in which direction (decreasing or increasing generation) and by what extent.

Furthermore, each combined balancing capacity offer may contain the net regulating capacity of both DGs 18 and loads 16. For example both the photovoltaic generator 18a and the smart EV charger 17b can contribute to up regulation by exposing more photovoltaic surface area to the sun and by switching from fast charging mode to slow charging mode. Similarly, both the photovoltaic generator 18a and the smart EV charger 17b can contribute to down regulation by exposing less photovoltaic surface area to the sun and by switching from slow charging mode to fast charging mode. The combined balancing capacity can be included in a single balancing capacity offer.

At least one of the UBF servers 40, 402, 404, 406 is configured
- to compare the balancing capacity offers with current electric power supply and demand, which is preferably received from a TSO,
- to accept balancing capacity offers suitable for contributing to balancing current electric power supply and demand, and
- to transmit notifications of accepted balancing capacity offers to the gateways having transmitted the balancing capacity offers accepted.

As explained earlier, the term UBF server 40, 402, 404, 406 may refer to a plurality of servers, preferably in a hierarchical structure. Accordingly, electric power supply and demand balance can be regarded at different levels, for example at the level of a single DSO or at the level of single TSO, or at the level of a group of DSOs or TSOs.

Various modifications to the above disclosed embodiments will be apparent to a person skilled in the art without departing from the scope of protection determined by the attached claims.

## Claims

1. Method for balancing electric power supply and demand in an electricity system comprising electricity network and a plurality of points of demand, PODs each of which is electrically connected to at least one load, the method comprising
- providing a plurality of said loads with load power regulation modules,
- providing at least one remote server being remote from said plurality of PODs,
- providing a plurality of PODs with gateways, each gateway provided at one of said plurality of PODs being connectable to the at least one UBF server and to at least one load power regulation module at said POD,
- monitoring loads provided with load power regulation modules by the gateways at the PODs,
- creating balancing capacity offers by the gateways for regulating power consumption of said loads,
- transmitting said balancing capacity offers from the gateways to the at least one remote server,
- comparing said balancing capacity offers with current electric power supply and demand,
- accepting balancing capacity offers suitable for contributing to balancing current electric power supply and demand,
- sending, from the at least one remote server notifications of accepted balancing capacity offers to the gateways having transmitted the balancing capacity offers accepted,
- sending commands from the gateways to the load power regulation modules connected to the loads to which the accepted balancing capacity offers relate, said commands causing the load power regulation modules to regulate the power consumption of said loads in accordance with the accepted balancing capacity offers.

2. The method according to claim 1, wherein a plurality of PODs is electrically connected to at least one distributed generator (DG),
- providing a plurality of said SGs with supply power regulation modules at PODs provided with said gateways, the supply power regulation modules being connectable to the gateway at the corresponding POD,
- monitoring DGs provided with supply power regulation modules by the gateways at the PODs,
- creating balancing capacity offers by the gateways for regulating power supplied by said DGs,
- transmitting said balancing capacity offers from the gateways to the at least one remote server,
- comparing said balancing capacity offers with current electric power supply and demand,
- accepting balancing capacity offers suitable for contributing to balancing current electric power supply and demand,
- sending, from the at least one remote server notifications of accepted balancing capacity offers to the gateways having transmitted the balancing capacity offers accepted,
- sending commands from the gateways to the supply power regulation modules connected to the DGs to which the accepted balancing capacity offers relate, said commands causing the supply power regulation modules to regulate power supplied by said DGs in accordance with the accepted balancing capacity offers.

3. Universal balancing framework (UBF) for balancing electric power supply and demand in an electricity system comprising electricity network and a plurality of PODs each of which is electrically connected to at least one load through an electric meter, the UBF further comprising
a plurality of load power regulation modules each of which is electrically connected to one of said loads,
at least one remote server being remote from said plurality of PODs,
a plurality of gateways each of which is installed at one of said plurality of PODs and being connectable to the at least one server and to at least one load power regulation module at said POD, the gateways being configured
- to monitor loads provided with load power regulation modules at the PODs,
- to create balancing capacity offers for regulating power consumption of said loads,
- to transmit said balancing capacity offers to the at least one remote server,
- to transmit, upon receipt of notifications of accepted balancing capacity offers from the at least one remote server, commands to the load power regulation module connected to the loads to which the accepted balancing capacity offers relate, said command causing said load power regulation modules to regulate the power consumption of said loads in accordance with the accepted balancing capacity offers.

4. The universal balancing framework according to claim 3, wherein a plurality of PODs is electrically connected to at least one distributed generator (DG) through a bi-directional electric meter, the UBF further comprising:
a plurality of supply power regulation modules each of which is electrically connected to one of said DGs, the supply power regulation modules being connectable to the gateway at the corresponding POD,
the gateways being configured:
- to monitor DGs provided with supply power regulation modules at the PODs,
- to create balancing capacity offers for regulating power supplied by said DGs,
- to transmit said balancing capacity offers to the at least one remote server,
- to transmit, upon receipt of notifications of accepted balancing capacity offers from the at least one remote server, commands to the supply power regulation modules connected to the DGs to which the accepted balancing capacity offers relate, said commands causing said supply power regulation modules to regulate the power supplied by said DGs in accordance with the accepted balancing capacity offers.

5. The universal balancing framework according to claims 3 or 4, wherein the at least one remote server being configured
- to compare the balancing capacity offers with current electric power supply and demand,
- to accept balancing capacity offers suitable for contributing to balancing current electric power supply and demand,
- to transmit notifications of accepted balancing capacity offers to the gateways having transmitted the balancing capacity offers accepted.
